# EUROPEAN PATENT APPLICATION

(11) **EP 1 777 771 A1**
(43) Date of publication of application: **25.04.2007**
(21) Application number: 06730516.9
(22) Date of filing: 29.03.2006
(51) Int. Cl.: H01M 10/40, H01M 2/16, H01M 4/02, H01M 4/38, H01M 4/58

(54) **LITHIUM SECONDARY BATTERY**

(30) Priority: 31.03.2005 JP 2005103167
(71) Applicant: MATSUSHITA ELECTRIC INDUSTRIAL CO., LTD., Osaka 571-8501 (JP)
(72) Inventor: TAKEZAWA, Hideharu Matsushita Ind. Co. Ltd IP Rights Operations Company, Osaka-shi, Osaka 540-6319 (JP); KASAMATSU. Shinji Matsushita Ind. Co. Ltd IP Rights Operations Company, Osaka-shi, Osaka 540-6319 (JP)
(74) Representative: TBK-Patent
(86) International application number: PCT/JP2006/006568
(87) International publication number: WO 2006/106782

(57) **Abstract**

A high capacity lithium secondary battery with excellent safety is provided by suppressing expansion of a negative electrode active material during charge and increasing the content of a heat-resistant resin in a separator relative to conventional one. The lithium secondary battery includes: a negative electrode active material that comprises compound particles containing at least one metal element selected from the group consisting of Si, Sn, Al, and Zn; and a separator that has a first porous layer comprising polyolefin and a second porous layer comprising a heat-resistant resin. The separator contains 10 to 60 parts by weight of the second porous layer per 100 parts by weight of the first porous layer.

## Description

### Technical Field

The present invention relates to lithium secondary batteries, and more particularly, to negative electrode active materials and separators of lithium secondary batteries.

### Background Art

Nickel-cadmium storage batteries and nickel-metal hydride storage batteries have been mainly used as the power sources for driving AV appliances, notebook personal computers, and portable communications appliances. However, in recent years, such electronic devices have been becoming cordless and more portable, and there is accordingly a demand for secondary batteries with higher energy densities. Such demand has lead to development of lithium secondary batteries that are compact and lightweight, capable of quick charge, and have higher energy densities.

To achieve higher energy densities, for example, various materials for use as positive electrode active materials and negative electrode active materials have been examined. Graphite-type carbon materials have already been commercialized as negative electrode active materials. However, since their useful capacities are approaching the limits, other high capacity materials are required. Particularly, materials made of a metal such as Si or Sn or an alloy thereof are being intensively studied since they are capable of absorbing and desorbing more lithium than graphite and have higher capacities. On the other hand, although these active materials can provide high capacities, they undergo very large volume changes due to absorption and desorption of lithium. For example, the theoretical expansion rate of graphite upon lithium absorption is 110%, while the theoretical expansion rate of Si upon lithium absorption is 410%. Such expansion and contraction of negative electrode active materials have various adverse effects on reliability and electrical characteristics of batteries.

For example, when Si is used as a negative electrode active material in a battery, micro short-circuits may occur upon charge/discharge, thereby resulting in degradation of coulombic efficiency in an early stage. The reason of occurrence of micro short-circuits is that the separator is unable to withstand the stress due to the expansion and contraction of Si and the negative electrode penetrates the separator, thereby coming into contact with the positive electrode.
With respect to the methods for preventing the micro short-circuits of batteries using such negative electrode active materials that expand and contract significantly, Patent Document 1 discloses the use of a separator composed of a low melting-point resin such as polyethylene and a high melting-point resin (including aramid resin having no melting point). Also, Patent Document 2 discloses the use of a separator composed of polyethylene or polypropylene that has high penetrating strength.
Patent Document 1: Japanese Laid-Open Patent Publication No. 2004-87209
Patent Document 2: Japanese Laid-Open Patent Publication No. 2000-173660

### Disclosure of Invention

### Problem That the Invention Is to Solve

Patent Document 1 proposes a separator made of a mixture of a low melting-point resin and a high melting-point resin, and a separator composed of a laminate of a low melting-point resin layer and a high melting-point resin layer.
However, in the case of the separator composed of a mixture of a low melting-point resin and a high melting-point resin, if there is a large difference in melting point between the resins, the low melting-point resin and the high melting-point resin tend to separate, and it is difficult to obtain a homogeneous separator. Thus, even when the separator strength at room temperature is improved, the separator strength tends to deteriorate under environments at high temperatures of 130°C or more, since the high melting-point resin does not sufficiently exhibit its function of maintaining the separator strength and mainly the low melting-point resin becomes softened.

Also, in the case of the separator composed of a laminate of a low melting-point resin layer and a high melting-point resin layer, the content of the high melting-point resin in the separator is as low as 5% by weight of the low melting-point resin layer. Hence, the high melting-point resin does not sufficiently exhibit its function of maintaining the separator strength under high-temperature environments. As a result, the separator strength tends to degrade.
Therefore, in the case of batteries using Si, which expands and contracts significantly, as a negative electrode active material, the above-mentioned degradation of separator strength under high-temperature environments may cause an internal short-circuit, possibly leading to abnormal heat generation of the batteries.

Further, the negative electrode active material of Patent Document 2 has a lower expansion rate than a substance composed simply of Si, but it has a greater expansion rate than graphite. Also, the separator of Patent Document 2, which is made of a low melting-point resin, suffers from a problem of safety under high-temperature environments.

In order to solve these conventional problems, it is therefore an object of the present invention to provide a high capacity lithium secondary battery with excellent safety, by suppressing the expansion of a negative electrode active material during charge and increasing the content of a high melting-point, heat-resistant resin in a separator relative to conventional one.

### Means for Solving the Problem

The present invention is directed to a lithium secondary battery including: a positive electrode including a positive electrode active material; a negative electrode including a negative electrode active material; a separator interposed between the positive electrode and the negative electrode; and a non-aqueous electrolyte. The negative electrode active material comprises a compound containing at least one metal element selected from the group consisting of Si, Sn, Al, and Zn. The separator has a first porous layer comprising polyolefin and a second porous layer comprising a heat-resistant resin, and the separator contains 10 to 60 parts by weight of the second porous layer per 100 parts by weight of the first porous layer.
Thus, the expansion of the negative electrode during charge is reduced and the stress exerted on the separator is thus reduced, while the deformation of the separator at high temperatures is reduced and abnormal heat generation due to a short-circuit between the negative electrode and the positive electrode can be prevented. The above-mentioned compound may be in the form of particles or a thin film, and at least a part thereof is preferably microcrystalline or amorphous.

The negative electrode preferably comprises carbon nanofibers (CNFs).
The CNFs are preferably integrated with the compound. For example, a catalyst can be placed on the surface of particles or a thin film comprising the above-mentioned compound, and CNFs can be grown on the surface using the catalyst.

Also, the negative electrode active material preferably comprises a composite having a first phase including at least one metal element selected from the group consisting of Si, Sn, Al, and Zn and a second phase containing a transition element. The composite may be in the form of particles or a thin film.
The first phase preferably includes at least one selected from the group consisting of the metal element, an alloy containing the metal element, and an intermetallic compound containing the metal element.
Preferably, the first phase comprises Si.
The transition element is preferably at least one selected from the group consisting of Fe, Co, Ni, Cu, and Ti, and the second phase includes at least one selected from the group consisting of the transition element, an alloy containing the transition element, and an intermetallic compound containing the transition element.
Preferably, the second phase comprises TiSi₂.
Preferably, the negative electrode active material further comprises graphite.

The heat-resistant resin preferably has a heat deformation temperature of 260°C or more.
The heat-resistant resin is preferably at least one selected from the group consisting of aramid, polyimide, and polyamide-imide.
It is preferred that the separator comprise a laminate of the first porous layer and the second porous layer, and that the laminate be integrated.

One of the positive electrode and the negative electrode is preferably covered with the second porous layer.
It is preferred that the positive electrode comprise a positive electrode material mixture containing the positive electrode active material, that the negative electrode comprise a negative electrode material mixture containing the negative electrode active material, and that one of the positive electrode material mixture and the negative electrode material mixture be covered with the second porous layer.

### Effects of the Invention

According to the present invention, by increasing the content of the heat-resistant resin in the separator relative to conventional one, the separator strength at high temperatures is significantly improved, so that the safety of the lithium secondary battery is improved. Since the expansion of the negative electrode active material during charge is suppressed, a micro short-circuit due to penetration of the negative electrode through the separator can be prevented. Further, since the negative electrode active material has a high capacity, the capacity of the lithium secondary battery can be heightened.

### Brief Description of Drawings

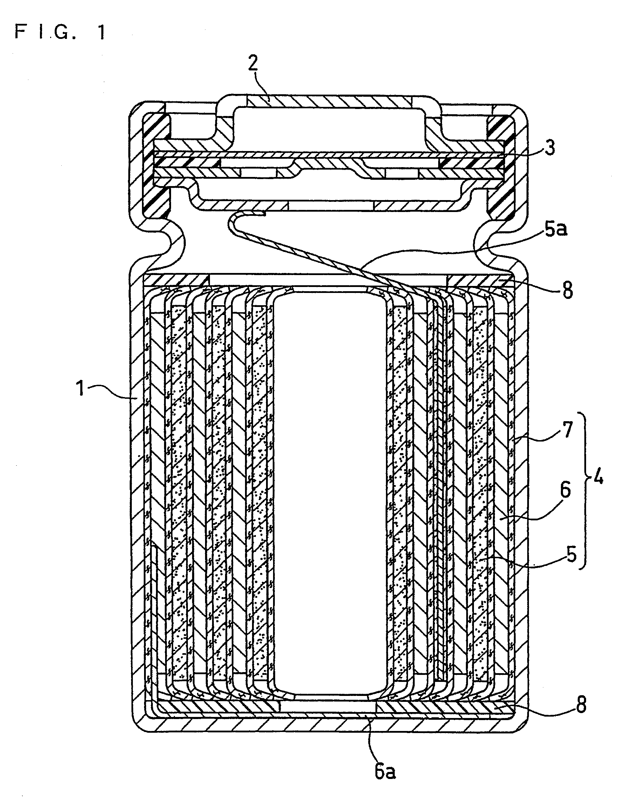

FIG. 1 is a longitudinal sectional view of a cylindrical lithium secondary battery in an Example of the present invention.

### Best Mode for Carrying Out the Invention

There has been a finding that when a separator contains 5 parts by weight of a heat-resistant resin layer such as aramid per 100 parts by weight of a low melting-point resin layer, the strength of the separator is improved. Based on this finding, the present inventors have conducted examinations as to increasing the content of the heat-resistant resin layer in order to improve battery safety at high temperatures. As a result, they have found that when the content of the heat-resistant resin porous layer in the separator is 10 parts by weight or more per 100 parts by weight of the polyolefin porous layer, the strength of the separator is significantly improved at high temperatures compared with conventional one and that battery safety is remarkably improved.
Also, by combining such a separator with a high capacity negative electrode active material with a small expansion rate upon charge, the present inventors have realized a lithium secondary battery having excellent safety and high capacity compared with conventional ones.

That is, the present invention relates to a lithium secondary battery that includes a positive electrode including a positive electrode active material, a negative electrode including a negative electrode active material, a separator interposed between the positive electrode and the negative electrode, and a non-aqueous electrolyte. The negative electrode active material comprises a compound that contains at least one metal selected from the group consisting of Si, Sn, Al, and Zn. The separator has a first porous layer comprising polyolefin (hereinafter also referred to as an "α layer") and a second porous layer comprising a heat-resistant resin (hereinafter also referred to as a "β layer"), and the separator contains 10 to 60 parts by weight of the β layer per 100 parts by weight of the α layer.

Provided that the above-mentioned compound is in particulate form, embodiments of the present invention are hereinafter described, but the present invention is not to be construed as being limited only to these embodiments.
Particles of such a compound has a low expansion rate upon charge as well as a high capacity. As such compound particles, for example, alloys and intermetallic compounds containing at least one metal element selected from the group consisting of Si, Sn, Al, and Zn (hereinafter also referred to as "elements A"); and compounds containing an element A and a typical element such as C, O, N, S, or P may be used. Such examples include: oxides such as SiOx (0<x<2) and SnOx (0<x<2); carbides and nitrides such as SiCy (0<y<1) and SiNz (0<z<1.3). Two or more kinds of typical elements may be contained. Halides containing an element A and salts thereof may also be used. For example, salts such as SnF₄ and SnSO₄ may be used.

Composite particles having a first phase that contains at least one metal selected from the group consisting of Si, Sn, Al, and Zn (hereinafter also referred to as an "A phase") and a second phase containing a transition metal (hereinafter also referred to as a "B phase") are preferred in terms of reducing the irreversible capacity and heightening the capacity. The A phase comprises, for example, a metal element A, or an alloy or intermetallic compound containing an element A. The element A is preferably Si or Sn because they have high capacities. Further, the element A is more preferably Si since it has a high volume capacity density (mAh/cc) and a high weight capacity density (mAh/g). The A phase may contain two or more kinds of elements A in combination. The A phase has high electrochemical activity.

The B phase comprises, for example, a transition element of Fe, Co, Ni, Cu, Ti, or Zr (hereinafter also referred to as an "element B"), an alloy or intermetallic compound containing an element B, or a conductive ceramics such as TiN, TiC, TiB₂, SnO₂ or In₂O₃. Among them, the element B is preferably Ti, Fe, Co, Ni, or Cu. Further, an alloy or intermetallic compound containing Ti is more preferred, and TiSi₂ is particularly preferred in terms of electronic conductivity. The B phase has high electronic conductivity and performs the function of easing the stress exerted by the expansion and contraction of the A phase.

With respect to the crystallinity of the compound particles, at least part of the constituent components (A phase and B phase) of the compound particles is microcrystalline or amorphous in order to effectively suppress cracking of the particles due to expansion thereof. Further, these compound particles are preferably formed of these components that are dispersed on a nano-size level. In this case, the stress created by the expansion of the phase having the function of absorbing and desorbing lithium is dispersed and eased in the particles.

Also, in terms of mechanics of materials, when the crystallite size becomes as small as nano-size, the strength of the particles to withstand deformation is significantly improved, so that cracking of the particles due to expansion can be suppressed. A smaller crystallite size is better, and the crystallite size calculated from the half width of the main peak in an X-ray diffraction pattern obtained by X-ray diffraction analysis is preferably 50 nm or less. The crystallite size is more preferably 20 nm or less.

Further, the compound particles may be composite particles having the A phase and the B phase.
In this case, the content of the A phase in the composite particles is preferably 20 to 90% by weight. If the content of the A phase in the composite particles is less than 20% by weight, the ratio of the A phase in the composite particles decreases, so that it is difficult to obtain a high capacity. On the other hand, if the content of the A phase in the composite particles exceeds 90% by weight, the ratio of the B phase in the composite particles decreases, so that the electronic conductivity of the composite particles lowers.

In addition to the use of the compound particles as the negative electrode active material in order to suppress expansion, it is preferred that the negative electrode contain carbon nanofibers (CNFs) in order to suppress excessive expansion of the negative electrode material mixture containing the compound particles. CNFs form gaps in the negative electrode material mixture, thereby reducing the expansion stress exerted on the negative electrode material mixture by the expansion of the compound particles. To further enhance the effect of reducing expansion, the CNFs and the compound particles are preferably integrated, which is also effective in improving other performance such as cycle characteristics.

The CNFs may be in any form, for example, in the form of tubes, accordion pleats, plates, and herringbones. The CNFs may be composed only of one of these, may comprise two or more of them, or may comprise CNFs in other form. Also, the fiber diameter of the CNFs is preferably 1 nm to 1000 nm, and more preferably 50 nm to 300 nm.
The fiber length and fiber diameter of the CNFs can be measured with a scanning electron microscope (SEM) or the like. Also, the average length and average diameter can be obtained, for example, by measuring the fiber length and fiber diameter of given 20 to 100 CNFs and averaging them.

Also, the length of the CNFs is preferably 1 nm to 1000 µm, and more preferably 500 nm to 100 µm. When the length of the CNFs is 1 nm or more, such effects as improvements of negative electrode conductivity and absorption of expansion stress exerted by materials A can be obtained. When it is 1000 µm or less, the active material density of the negative electrode can be maintained and a high energy density can be obtained.

Integrated particles of CNFs and compound particles can be obtained by growing CNFs on the surface of compound particles carrying a catalyst element that promotes the growth of CNFs. At least one end of the CNFs is bonded to the surface of the compound particles and, generally, only one end thereof is bonded. As used herein, "being bound" encompasses, for example, chemical bonding and bonding by intermolecular force, but it does not encompass bonding with a resin component.

While the catalyst element that promotes the growth of CNFs is not particularly limited, Mn, Fe, Co, Ni, Cu, Mo, etc. can be used. They may be used singly or in combination of two or more of them. The catalyst element may be in the form of metal, or may be in the form of a compound such as an oxide. Also, when the catalyst element is in the form of metal, it may be a substance composed simply of a metal or may be in the form of an alloy. Further, when the catalyst element is in the form of an alloy, it may be an alloy of the catalyst element and other metal element(s). Also, catalyst element(s) in different forms may be present in the negative electrode active material. The catalyst element is preferably present in the form of particles in the negative electrode active material.

The content of the CNFs in the negative electrode is preferably 5 to 70% by weight of the total volume of the compound particles, the catalyst element, and the CNFs, and more preferably 10% by weight to 40% by weight. If the content of the CNFs is less than 5% by weight, the effects of heightening the conductivity among the active material particles and of absorbing the stress exerted by the expansion of the active material decrease. Also, if the content of the CNFs exceeds 70% by weight, the active material density of the negative electrode lowers.
Also, a mixture of the above-mentioned composite particles and a conventionally used graphite-type carbon material may be used as the negative electrode active material. As the graphite-type carbon material, for example, highly crystalline artificial graphite or natural graphite may be used. Also, a graphite material with a treated surface can be used.

The electrode shape may be a sheet, a pellet, a film, etc.
An electrode sheet can be obtained, for example, by applying an electrode material mixture, which is prepared by mixing an active material powder with a conductive agent, a binder, etc. in a solvent, onto a current collector. An electrode pellet can be obtained, for example, by molding a mixture of an active material powder, a conductive agent, a binder, etc. An electrode film can be obtained, for example, by forming an active material film on a current collector by a method such as sputtering, evaporation, CVD, or plating.

The conductive agent may be any material having electronic conductivity. For example, graphites such as natural graphite (e.g., flake graphite), artificial graphite, and expanded graphite; carbon blacks such as acetylene black and ketjen black; conductive fibers such as carbon fiber and metal fiber; metal powders such as copper and nickel; and organic conductive materials such as polyphenylene derivatives can be used singly or as a mixture thereof. Among them, carbon blacks, such as acetylene black and ketjen black, which are in the form of fine particles and highly conductive, are preferred. With respect to the amount of the conductive agent added, there is no particular limitation unless the effects of the present invention are impaired.

The binder may be any known one. For example, resins such as polyethylene, polypropylene, polytetrafluoroethylene (PTFE), polyvinylidene fluoride (PVDF), styrene butadiene rubber (SBR), and polyacrylic acid can be used singly or as a mixture thereof.

The current collector may be any electronic conductor that does not cause chemical change in an assembled battery. For example, the negative electrode current collector may be copper, stainless steel, nickel, titanium, carbon, conductive resin, or the like. In addition, composite materials obtained by treating copper or stainless steel surface with carbon, nickel, or titanium may be used. Among them, copper or a copper alloy is preferable in terms of material costs, workability, and stability.

Also, the positive electrode current collector may be aluminum, stainless steel, nickel, titanium, carbon, conductive resin, or the like. In addition, composite materials obtained by treating aluminum or stainless steel surface with carbon, nickel, or titanium may be used. Among them, aluminum and an aluminum alloy are preferred.

The surface of these materials may be subjected to an oxidation treatment. Also, the surface of the current collector may be roughened. The form of the current collector can be foil and, in addition, can be a film, sheet, net, punched, lath, porous, foam, molded fibers, etc. While the thickness of the current collector is not particularly limited, it may be 5 to 50 µm.

When the separator has the α layer and the β layer and the separator contains 10 to 60 parts by weight of the β layer per 100 parts by weight of the α layer, an excellent shut-down function can be obtained as well as high heat resistance and shrink resistance.
As used herein, shrink resistance is one of the physical properties representing heat resistance. The shrink resistance of a separator is better as the separator is more unlikely to shrink due to heat of high temperatures, i.e., as the separator deforms less at high temperatures. When the shrink resistance lowers, i.e., when the separator becomes softened at high temperatures and is susceptible to shrinkage due to heat in the width direction or longitudinal direction of the separator, the positive electrode plate and the negative electrode plate may come into contact with each other, thereby resulting in an internal short-circuit.

As used herein, the shut-down function refers to the following function of a separator. That is, when lithium secondary batteries are externally short-circuited or overcharged with a large current, the battery temperature rises due to the heat generated inside the battery. At this time, the porous separator becomes softened or melted and its pores are closed. As a result, an insulating film is formed and the internal resistance of the battery is increased, so that the current is shut down and the heat generation of the battery is stopped.
Also, the above-described separator has excellent strength and shape-retaining ability at high temperatures. Thus, even when the negative electrode active material significantly expands and contracts, sufficient battery safety at high temperatures can be ensured.

If the content of the β layer in the separator is less than 10 parts by weight per 100 parts by weight of the α layer, the strength and shrink resistance of the separator at high temperatures degrade significantly. On the other hand, if the content of the β layer in the separator is more than 60 parts by weight per 100 parts by weight of the α layer, the shut-down function does not function sufficiently. The content of the α layer in the separator is not particularly limited as long as the shut-down function of the α layer works sufficiently.
Further, the content of the β layer in the separator is preferably 15 to 30 parts by weight per 100 parts by weight of the α layer, since this makes it possible to reduce the thickness of the separator and heighten the battery capacity while maintaining the above-mentioned effects.

The constituent material of the α layer may be a known material such as polyethylene or polypropylene, which is a polyolefin resin. The constituent material of the β layer is desirably a heat-resistant resin with a heat deformation temperature of 260°C or more. The heat deformation temperature of the heat-resistant resin can be obtained, for example, by measuring the deflection temperature under a load of 1.82 MPa according to test standard ASTM-D648 of American Society for Testing and Materials.
As used herein, "heat-resistant" refers to having sufficiently high glass-transition point and melting-point, and that the temperature at which heat decomposition involving chemical change starts is sufficiently high. Deflection temperature under load is used as heat deformation temperature that indicates mechanical strength to evaluate heat resistance. As the heat deformation temperature becomes higher, the deformation of a separator is suppressed more when it shrinks due to heat.

When the heat deformation temperature of the heat-resistant resin of the β layer is 260°C or more, excellent thermal stability can be obtained even if the battery temperature further rises (usually to approximately 180°C) due to accumulation of heat produced by a heated battery. Examples of such heat-resistant resin include aramid, polyamide-imide, polyimide, polyphenylene sulfide, polyetherimide, polyethylene terephthalate, polyarylate, polyether nitrile, polyether ether ketone, and polybenzoimidazole. Among them, aramid, polyamide-imide, and polyimide are preferable since they have very high heat resistance.

The thickness of the separator is preferably 10 to 20 *µ*m. If the thickness of the separator exceeds 20 *µ*m, a high capacity lithium secondary battery cannot be realized. If the thickness of the separator is less than 10 *µ*m, sufficient mechanical strength cannot be obtained. The thicknesses of the α layer and β layer of the separator may be determined as appropriate depending on the contents of the respective resins constituting the α layer and the β layer, porosity, etc.

The separator can be produced by the following method.
A separator comprising an aramid β layer and an α layer can be obtained, for example, by applying an aramid solution that is prepared by dissolving aramid in a polar solvent of N-methylpyrrolidone (hereinafter also referred to as "NMP") onto a substrate comprising an α layer and drying it. At this time, by adding an inorganic oxide filler to the aramid solution, the aramid β layer can be formed. As the inorganic oxide filler, for example, a porous inorganic material such as alumina, zeolite, silicon nitride, or silicon carbide is preferably used.

Also, a separator having a polyamide-imide β layer and an α layer can be obtained, for example, by casting a polyamic acid solution, which is a precursor of polyimide, drawing it to form a polyamide-imide porous thin film, and integrating it with a substrate comprising an α layer by means of heat rolls or the like. The porosity of the β layer can be controlled by changing the drawing conditions.
Polyamide-imide has a high heat deformation temperature of 278°C and its molecular skeleton has both amido groups and imide groups. Thus, the polyamide-imide β layer has high mechanical strength derived from polyimide resin and suitable flexibility derived from polyamide resin.

In the above description, the α layer was used as the substrate, but the electrode of the positive electrode or the negative electrode may be used as the substrate. In this case, a separator comprising an α layer and a β layer may be prepared by forming a β layer on the positive electrode or the negative electrode in the same manner as the above, and laminating the electrode covered with the β layer and an α layer such that the α layer and the β layer face each other. Although a separator may be formed by laminating an electrode covered with an α layer and a β layer, it is more preferable to form a β layer on an electrode, as described above, in view of productivity.

The non-aqueous electrolyte used in the present invention is composed mainly of a non-aqueous solvent and a lithium salt dissolved therein. An aprotic organic solvent is used as the non-aqueous solvent. Such examples include: cyclic carbonates such as ethylene carbonate, propylene carbonate, and butylene carbonate; cyclinc carboxylic acid esters such as γ-butyrolactone, γ-valerolactone, and furanone; chain carbonates such as diethyl carbonate, ethyl methyl carbonate, and dimethyl carbonate; chain ethers such as 1,2-methoxy ethane, 1,2-ethoxy ethane, and ethoxymethoxyethane; and cyclic ethers such as tetrahydrofuran and 2-methyltetrahydrofuran. They may be used singly or in combination of two or more of them. Unless the effects of the present invention are impaired, it is also possible to use non-aqueous solvents such as cyclic carbonates, cyclic carboxylic acid esters, and chain carbonates in which a part of the hydrocarbon group is replaced with a halogen element such as fluorine.

Examples of lithium salts include LiPF₆, LiBF₄, and LiAsF₆. It is also possible to use lithium perfluoroalkyl sulfonic acid imides such as LiN(CF₃SO₂)₂, LiN(C₄F₉SO₂)₂, and LiN(CF₃SO₂)(C₄F₉SO₂), and lithium perfluoroalkyl sulfonic acid methide such as LiC(CF₃SO₂)₂. They may be blended for use, if necessary.

Also, examples of positive electrode active materials used in the present invention are: lithium-containing compounds that are generally known as positive electrode materials of lithium secondary batteries, such as compounds represented by the general formula LiₓCoO₂ (0.4≦X≦1.0), compounds represented by the general formula LiₓNiO₂ (0.2≦X≦1.0), and compounds represented by the general formula LiₓMn₂O₄ (0<X≦1.0); and compounds that do not contain lithium and are generally known as positive electrode materials of lithium secondary batteries. Also, in order to improve cycle characteristics, a part of the transition element(s) contained in the above-mentioned compounds may be replaced with other element.
Also, the configuration of the present invention is applicable to any battery shapes, such as coin, button, sheet, layered, cylindrical, flat, rectangular, and large-sized ones used in electric vehicles.
Examples of the present invention are hereinafter described in detail. These Examples, however, are not to be construed as limiting in any way the present invention.

### Examples

### <<Example 1>>

### (1) Preparation of negative electrode active material

A starting material of 2.5 kg of a Ti-Si alloy (the mixing weight ratio is Ti:Si=37:63) obtained by a melting method and 300 kg of 1-inch-diameter stainless steel balls were placed in a stainless steel container of a vibration ball mill (FV-30 available from Chuo Kakohki Industries, Ltd.). The container, which has an internal volume of 95 liters, was then covered. After the container was evacuated, Ar gas was introduced into the container until 1 atmosphere was reached. Subsequently, with the amplitude of the vibration ball mill set to 8 mm and the speed of rotation of the drive motor set to 1200 rpm, mechanical alloying was performed for 72 hours, to obtain composite particles a1 comprising Ti and Si.

Also, composite particles a2 comprising Co and Si, composite particles a3 comprising Ni and Si, composite particles a4 comprising Fe and Si, composite particles a5 comprising Ti and Si, and composite particles a6 comprising Cu and Si were prepared under the same conditions, using a Co-Si alloy (Co:Si=41:59), a Ni-Si alloy (Ni:Si=41:59), an Fe-Si alloy (Fe:Si=39:61), a Ti-Si alloy (Ti:Si=9:91), and a Cu-Si alloy (Cu:Si=20:80), respectively.

SiO powder (reagent available from Wako Pure Chemical Industries, Ltd.) that had been crushed and classified to a mean particle size of 10 µm was mixed with a solution prepared by dissolving 1 part by weight of nickel (II) nitrate hexahydrate (guaranteed reagent) available from Kanto Chemicals Co.,Ltd. into deionized water. The mixture of the SiO particles and the nickel nitrate solution was stirred for 1 hour and then dehydrated by an evaporator, so that nickel nitrate was carried on the surfaces of the SiO particles. Thereafter, the particles were placed into a ceramic reaction container and heated to 550°C in the presence of helium gas. The helium gas was then replaced with a mixed gas composed of 50% by volume of hydrogen gas and 50% by volume of methane gas and the particles were allowed to stand at 550°C for 10 minutes. As a result, nickel nitrate (II) was reduced and carbon nonofibers (CNFs) were grown. Thereafter, the mixed gas was replaced with helium gas, and the inside of the reaction container was allowed to cool to room temperature to obtain composite particles a7. From the weight change before and after this process, it was found that the content of the CNFs in the negative electrode active material was 21% by weight.

Using the composite particles a5, CNFs were grown in the same manner as in the preparation of the composite particles a7. The content of the CNFs in the negative electrode active material was 23% by weight. An SEM observation showed that the mean fiber diameter and mean fiber length of the CNFs were 100 nm and 10 *µ*m, respectively. In this way, composite particles a8 were obtained.

Using commercially available Ti powder and Sn powder as starting materials, an alloy was synthesized in nitrogen by mechanical alloying. The ratio was 50% by weight of Ti to 50% by weight of Sn. It was confirmed that the synthesized alloy contained 2 phases of Sn and TiN. This Ti-Sn alloy was classified to a mean particle size of 10 µm. CNFs were grown in the same manner as in the preparation of the composite particle a7 except for the use of the Ti-Sn alloy. The content of the CNFs in the negative electrode material was 23% by weight. In this way, composite particles a9 were obtained.

### (2) Structural analysis of negative electrode active material

The structures of the respective composite particles thus obtained were analyzed by X-ray diffraction. RAD-rx available from Rigaku Corporation was used as the X-ray diffractometer. CuK α ray was used as the X ray source. Acceleration voltage was set to 50 kV, and acceleration current was set to 150 mA. Also, crystallite size was calculated from the half width of the main peak in the X-ray diffraction pattern. The measurement results showed the following.
In the X-ray diffraction pattern obtained in the measurement of the composite particles a1, only the peak attributable to TiSi₂ was observed and no peak attributable to Si was found. The composite particles a1 were composed of 2 phases of Si and TiSi₂, Si was amorphous, and the crystallite size of TiSi₂ was 15 nm.

The composite particles a2 were composed of 2 phases of Si and CoSi₂, Si was amorphous, and the crystallite size of TiSi₂ was 13 nm. The composite particles a3 were composed of 2 phases of Si and NiSi₂, Si was amorphous, and the crystallite size of TiSi₂ was 13 nm. The composite particles a4 were composed of 2 phases of Si and FeSi₂, Si was amorphous, and the crystallite size of TiSi₂ was 14 nm. The composite particles a5 were composed of 2 phases of Si and TiSi₂, and the crystallite sizes of Si and TiSi₂ were 10 nm and 8 nm, respectively. The composite particles a6 were composed of 2 phases of Si and Cu, and the crystallite sizes of Si and Cu were 12 nm and 9 nm, respectively. Further, SiO was amorphous. Also, Sn and TiN were amorphous.
Further, the content of the Si phase in the composite particles a1 to a4 was 20% by weight, and the content of the Si phase in the composite particles a5 and a6 was 80% by weight.

### (3) Preparation of negative electrode

The composite particles a1 to a4 and a7 to a9 that were classified into 20 µm or less were used as the negative electrode active materials. Each of the negative electrode active materials, acetylene black (DENKA BLACK available from Denki Kagaku Kogyo K.K.) serving as the conductive agent, and polyacrylic acid as the binder were mixed together in a weight ratio of 75:15:10. This mixture was further mixed and kneaded with a polyacrylic acid aqueous solution (polyacrylic acid solid content 25%, available from Wako Pure Chemical Industries, Ltd.) and pure water, to form a negative electrode material mixture paste. This negative electrode material mixture paste was applied by a doctor blade process onto a 10-µm-thick electrolytic copper foil, which was then rolled to a suitable thickness and dried at 100°C for 12 hours. In this way, negative electrodes A1 to A4 and A7 to A9 were produced. In the case of the negative electrode A7, a 10-*µ*m Li metal was deposited on the surface of the electrode material mixture by vapor deposition and this was used as the negative electrode.

Also, the composite particles a5 that were classified into 20 µm or less, serving as the negative electrode active material, artificial graphite powder (KS-44 available from Timcal Ltd.), acetylene black as the conductive agent, and polyacrylic acid as the binder were mixed together in a weight ratio of 20:80:5:5. This mixture was further mixed and kneaded with a polyacrylic acid aqueous solution (polyacrylic acid solid content 25%, available from Wako Pure Chemical Industries, Ltd.) and pure water, to form a negative electrode material mixture paste. A negative electrode A5 was produced in the same manner as in the above except for the use of this negative electrode material mixture paste. Also, using the composite particles a6, a negative electrode A6 was produced in the same manner as in the case of using the composite particles a5.

Further, a graphite crucible with the negative electrode active material Si (purity 99.999%, available from Furuuchi Chemical Corporation, ingot) placed therein was disposed just under a current collector of electrolytic Cu foil (available from Furukawa Circuit Foil Co., Ltd., thickness 18 µm) affixed to a water-cooled roller in a vapor deposition device.
Subsequently, a nozzle for introducing oxygen gas was placed between the crucible and the electrolytic Cu, and oxygen gas (purity 99.7%, available from Nippon Sanso Corporation) was introduced into the vapor deposition device at a flow rate of 10 sccm (20 cm³ per minute). Under the condition of an acceleration voltage of -8 kV and a current of 150 mA, vapor deposition was performed by using an electron beam.
In this way, a negative electrode active material layer with a thickness of approximately 15 *µ*m was formed on one face of the electrolytic Cu foil, to obtain a negative electrode A10. A measurement of the amount of oxygen contained in this negative electrode active material by a combustion method showed that the composition was represented by Si00.3. Also, an X-ray diffraction analysis showed that the negative electrode active material was amorphous.

### (4) Preparation of positive electrode

LiCoO₂ powder serving as the positive electrode active material, acetylene black as the conductive agent, and polyvinylidene fluoride (PVDF) as the binder in a weight ratio of 90:2:3 were mixed into a PVDF-NMP solution (part number;#1320, available from Kureha Corporation). This mixture was further mixed and kneaded with NMP, to form a positive electrode material mixture paste. This positive electrode material mixture paste was applied by a doctor blade process onto a 15-µm-thick aluminum foil, which was then rolled to a suitable thickness and fully dried at 85°C to obtain a positive electrode.

### (5) Preparation of separator

### (a) Preparation of a separator comprising an aramid resin porous layer (hereinafter referred to as an aramid layer) and a polyethylene porous layer (hereinafter referred to as a polyethylene layer)

Aramid resin was heated in a reaction vessel until it was completely dissolved in NMP, to obtain an aramid resin solution. At this time, 6.5 parts by weight of dry anhydrous calcium chloride was added to 100 parts by weight of NMP. This aramid resin solution was allowed to cool to room temperature. Thereafter, 3.2 parts by weight of paraphenylene diamine (available from Mitsui Chemicals, Inc.)(PPD) was added to 100 parts by weight of this aramid resin solution and was completely dissolved in the aramid resin solution.

The reaction vessel was placed in a 20°C constant temperature oven, and terephthalic acid dichloride (available from Mitsui Chemicals, Inc.)(TPC) was dropped into the reaction vessel little by little for 1 hour, so that polyparaphenylene terephthalamide (hereinafter referred to as PPTA) was synthesized via polymerization reaction. At this time, 5.8 parts by weight of TPC was added to 100 parts by weight of the aramid resin solution containing anhydrous calcium chloride and PPD.
Thereafter, the reaction vessel was left in the constant temperature oven for 1 hour to complete the reaction, and it was then placed into a vacuum chamber, and the solution was stirred under a reduced pressure for 30 minutes for deaeration, to obtain a polymerized liquid. The polymerized liquid was further diluted with an NMP solution containing calcium chloride, to obtain an aramid resin solution with a PPTA concentration of 1.4% by weight. To this solution were added 250 parts by weight of alumina particles with a mean particle size of 0.1 µm per 100 parts by weight of the aramid resin solid component.

The thus obtained aramid resin solution was thinly applied onto one face of a 14-µm-thick porous polyethylene sheet with a bar coater. The applied portion was dried with hot air of 80°C (air flow rate: 0.5 m³/second), so that a film containing aramid resin was formed on the polyethylene sheet. This film was fully washed with pure water to remove calcium chloride and then dried, so that an aramid layer was formed on the polyethylene sheet.
In this way, a 20-µm-thick separator s1 comprising a laminate of the aramid layer and the polyethylene layer was prepared. The aramid content of the separator s1 was 20% by weight. Also, the deflection temperature under a load of 1.82 MPa of the aramid resin was measured as heat deformation temperature according to test standard ASTM-D648. The heat deformation temperature of the aramid resin was 320°C.

Also, using a 16-µm-thick porous polyethylene sheet, a 20-µm-thick separator s2 comprising a laminate of an aramid layer and a polyethylene layer was produced in the same manner as in the above. The content of the aramid layer in the separator s2 was 10% parts by weight per 100 parts by weight of the polyethylene layer.
Also, using a 12-µm-thick porous polyethylene sheet, a 20-µm-thick separator s3 comprising a laminate of an aramid layer and a polyethylene layer was produced in the same manner as in the above. The content of the aramid layer in the separator s3 was 30% parts by weight per 100 parts by weight of the polyethylene layer.

### (b) Preparation of a separator comprising a polyimide resin porous layer (polyimide layer) and a polypropylene resin porous layer (polypropylene layer)

A polyamic acid solution, which is a precursor of polyimide, was subjected to casting and drawing, to obtain a porous thin film. This thin film was heated to 300°C for dehydration and imidization, to obtain a 6-µm-thick polyimide layer. Thereafter, the polyimide layer and a polypropylene sheet were laminated and rolled with heat rolls of 80°C. In this way, a 20-µm-thick separator s4 comprising a laminate of the polyimide layer and the polypropylene layer was produced.
The content of the polyimide layer in the separator s4 was 15 parts by weight per 100 parts by weight of the polypropylene layer. Also, the heat deformation temperature of the polyimide resin was 360°C.

### (c) Preparation of a separator comprising a polyamide-imide resin porous layer (polyamide-imide layer) and a polyethylene layer

Anhydrous trimellitic acid monochloride and diamine were mixed in NMP at room temperature, to obtain a polyamic acid solution. This polyamic acid solution was thinly applied onto one face of a polyethylene sheet with a bar coater, and the sheet was washed with water to remove the solvent. By blowing hot air of 80°C (air flow rate: 0.5 m³/second) to the applied portion, polyamide-imide was formed by cyclodehydration. In this way, a 20-µm-thick separator s5 comprising a laminate of the polyamide-imide layer and the polyethylene layer was produced.
The content of the polyamide-imide layer in the separator s5 was 15 parts by weight per 100 parts by weight of the polyethylene layer. Also, the heat deformation temperature of the polyamide-imide resin was 278°C.

### (6) Production of cylindrical lithium secondary battery

Cylindrical lithium secondary batteries were produced by the following method. FIG. 1 is a longitudinal sectional view of a cylindrical lithium secondary battery of the present invention.
A positive electrode 5 and a negative electrode 6 obtained in the above manner were spirally wound a plurality of turns with a separator 7 interposed therebetween, to form an electrode assembly 4. An insulating ring 8 was fitted to upper and lower faces of the electrode assembly 4. An aluminum positive electrode lead 5a attached to the positive electrode 5 was connected to a sealing plate 2. A copper negative electrode lead 6a attached to the negative electrode 6 was connected to the bottom of a battery case 1. The electrode assembly 4 was placed in the battery case 1, and an electrolyte was injected into the battery case 1. The electrolyte used was prepared by dissolving LiPF₆ at a concentration of 1M in a solvent mixture of ethylene carbonate and ethyl methyl carbonate in a volume ratio of 1:1. After the injection of the electrolyte, an insulating packing 3 was fitted, and the battery case 1 was sealed with the sealing plate 2.

Batteries 1 to 10 were produced by using the negative electrodes A1 to A10 as the negative electrode 6 and using the separator s1 as the separator 7, respectively, in the battery production. Also, batteries 11 to 14 were produced by using the negative electrode A8 and the separators s2 to s5, respectively.

### <<Comparative Example 1>>

Using a 18-µm-thick porous polyethylene sheet, a 20-µm-thick separator s6 comprising a laminate of an aramid layer and a polyethylene layer was produced in the same manner as in Example 1. The content of the aramid layer in the separator s6 was 5 parts by weight per 100 parts by weight of the polyethylene layer. Using the separator s6 and the negative electrode A8, a battery 15 was produced in the same manner as in Example 1.

### <<Comparative Example 2>>

A 8-µm-thick Si thin film was formed on each side of a current collector comprising a 18-µm-thick electrolytic copper foil by RF sputtering. Specifically, the current collector was fixed to a rotary drum in a vacuum chamber of an RF magnetron sputtering device, and the vacuum chamber was evacuated to 8 × 10⁻⁴ Pa or less. While argon gas was being introduced therein from the inlet at a flow rate of 50 sccm, sputtering was performed. RF power was 350 W.

Using the negative electrode comprising the thus produced Si thin films and the separator s6, a battery 16 was produced in the same manner as in Example 1.
Using the negative electrode comprising the thus produced Si thin films and the separator s1, a battery 17 was produced in the same manner as in Example 1.

### <<Comparative Example 3>>

A negative electrode material mixture paste was prepared by mixing 100 parts by weight of artificial graphite powder (KS-44 available form Timcal Ltd.) serving as the negative electrode active material, 3 parts by weight (solid component basis) of an aqueous dispersion of SBR (BM-400B available from Zeon Corporation) as the binder, and 1 part by weight of a carboxymethyl cellulose (CMC) aqueous solution as the thickener. This negative electrode material mixture paste was applied onto each side of a current collector comprising a 10-*µ*m-thick copper foil and dried at 100°C, to obtain a negative electrode.
Using the thus obtained negative electrode containing graphite and the separator s6, a battery 18 was produced in the same manner as in Example 1.

### (7) Discharge test and high temperature heating test

The batteries were charged at a constant voltage of 4.15 V (maximum charge current value:0.7 CA) until the charge current value became 0.1 CA. The batteries were then left for 30 minutes and discharged at a current value of 0.7 CA until the battery voltage reached 2.5 V to measure the discharge capacity (mAh).
Subsequently, the discharged batteries were charged under the same conditions as the above. The batteries were heated to 25°C to 130°C at a rate of 5°C/min in a temperature-controlled oven. Thereafter, they were allowed to stand at 130°C for 3 hours and the surface temperatures (°C) of the batteries were monitored by using thermocouples attached to the batteries. The highest temperatures were checked. Table 1 shows the test results.

**[Table 1]**

| Battery No. | Negative electrode | Separator | Battery capacity (mAh) | Highest temperature (°C) |
|---|---|---|---|---|
| 1 | A1 | s1 | 2430 | 133 |
| 2 | A2 | s1 | 2350 | 138 |
| 3 | A3 | s1 | 2400 | 136 |
| 4 | A4 | s1 | 2365 | 140 |
| 5 | A5 | s1 | 2295 | 135 |
| 6 | A6 | s1 | 2305 | 136 |
| 7 | A7 | s1 | 2525 | 133 |
| 8 | A8 | s1 | 2556 | 132 |
| 9 | A9 | s1 | 2433 | 135 |
| 10 | A10 | s1 | 2600 | 134 |
| 11 | A8 | s2 | 2450 | 140 |
| 12 | A8 | s3 | 2385 | 133 |
| 13 | A8 | s4 | 2400 | 136 |
| 14 | A8 | s5 | 2395 | 134 |
| 15 | A8 | s6 | 2370 | 178 |
| 16 | Si thin film | s6 | 2685 | 173 |
| 17 | Si thin film | s1 | 2680 | 160 |
| 18 | Graphite | s1 | 2085 | 169 |

The results of Table 1 indicate that when the negative electrode active material comprises Si- or Sn-containing compound particles or composite particles of such compound particles and CNFs and the content of the heat-resistant resin porous layer comprising aramid, polyimide, or polyamide-imide in the separator is 10 parts by weight or more per 100 parts by weight of the polyolefin porous layer, the heat generation of the batteries at high temperatures is reduced and high capacity can be obtained.
With respect to the content of Si or Sn in the composite particles, essentially the same effects as the above can be obtained even from other contents than those of Examples. Also, if the content of the heat-resistant resin porous layer is 10 parts by weight or more per 100 parts by weight of the polyolefin porous layer, essentially the same effects as the above can be obtained even from other heat-resistant resin contents than those of Examples.

### <<Example 2>>

The same aramid resin solution as that of Example 1 was thinly applied onto the surface of the negative electrode material mixture of the negative electrode A1 of Example 1 with a bar coater. The applied portion was dried with hot air of 80°C (air flow rate: 0.5 m³/second) to obtain a thin film. Thereafter, this thin film was fully washed with ethanol to remove calcium chloride and then dried to obtain an aramid layer. The thickness of the aramid layer was 5 *µ*m.

The negative electrode A1 with the aramid layer thus obtained, the positive electrode of Example 1, a 15-µm-thick porous polyethylene sheet were laminated to form an electrode assembly. At this time, the negative electrode A6 and the polyethylene sheet were laminated such that the aramid layer of the negative electrode A6 faced the polyethylene sheet, so that a separator comprising the aramid layer and the polyethylene layer was formed. Using this electrode assembly, a battery 19 was produced in the same manner as in Example 1. The content of the aramid layer in the separator was 15 parts by weight per 100 parts by weight of the polyethylene layer.

### <<Example 3>>

The same aramid resin solution as that of Example 1 was thinly applied onto the surface of the positive electrode material mixture of the positive electrode of Example 1 with a bar coater. The applied portion was dried with hot air of 80°C (air flow rate: 0.5 m³/second) to obtain a thin film. Thereafter, this thin film was fully washed with ethanol to remove calcium chloride and then dried to obtain an aramid layer. The thickness of the aramid layer was 5 µm.

The positive electrode with the β layer thus obtained, the negative electrode A1 of Example 1, a 15-µm-thick porous polyethylene sheet were laminated to form an electrode assembly. At this time, the positive electrode and the polyethylene sheet were laminated such that the aramid layer of the positive electrode faced the polyethylene sheet, so that a separator comprising the aramid layer and the polyethylene layer was formed. Using this electrode assembly, a battery 20 was produced in the same manner as in Example 1. The content of the aramid layer in the separator was 15 parts by weight per 100 parts by weight of the polyethylene layer.
Table 2 shows the test results of the batteries 19 and 20.

**[Table 2]**

| Battery No. | Battery capacity (mAh) | Highest temperature (°C) |
|---|---|---|
| 19 | 2424 | 139 |
| 20 | 2288 | 137 |

The results of Table 2 indicate that even in the case of forming a separator by laminating an aramid layer formed on an electrode and a polyethylene layer, when the negative electrode active material comprises composite particles composed of two phases of a Si-containing phase and a transition metal-containing phase and the content of the aramid layer in the separator is 10 parts by weight or more per 100 parts by weight of the polyethylene layer, the heat generation of the batteries at high temperatures is reduced and high capacity can be obtained.

### Industrial Applicability

The lithium secondary battery of the present invention is preferably used in personal digital assistants, portable electronic appliances, small-sized power storage devices for home use, two-wheel motor vehicles, electric vehicles, or hybrid electric vehicles.

## Claims

1. A lithium secondary battery comprising: a positive electrode comprising a positive electrode active material; a negative electrode comprising a negative electrode active material; a separator interposed between said positive electrode and said negative electrode; and a non-aqueous electrolyte,
wherein said negative electrode active material comprises a compound containing at least one metal selected from the group consisting of Si, Sn, Al, and Zn,
said separator has a first porous layer comprising polyolefin and a second porous layer comprising a heat-resistant resin, and
said separator includes 10 to 60 parts by weight of said second porous layer per 100 parts by weight of said first porous layer.

2. The lithium secondary battery in accordance with claim 1, wherein said negative electrode active material further comprises carbon nanofibers.

3. The lithium secondary battery in accordance with claim 2, wherein said carbon nanofibers are integrated with said compound.

4. The lithium secondary battery in accordance with claim 1 or 2, wherein said negative electrode active material comprises a composite having a first phase comprising at least one metal element selected from the group consisting of Si, Sn, A1, and Zn and a second phase comprising a transition element.

5. The lithium secondary battery in accordance with claim 4, wherein said first phase comprises at least one selected from the group consisting of said metal element, an alloy containing said metal element, and an intermetallic compound containing said metal element.

6. The lithium secondary battery in accordance with claim 4, wherein said first phase comprises Si.

7. The lithium secondary battery in accordance with claim 4, wherein said transition element is at least one selected from the group consisting of Fe, Co, Ni, Cu, and Ti, and said second phase comprises at least one selected from the group consisting of said transition element, an alloy containing said transition element, and an intermetallic compound containing said transition element.

8. The lithium secondary battery in accordance with claim 4, wherein said second phase comprises TiSi₂.

9. The lithium secondary battery in accordance with claim 4, wherein said negative electrode active material further comprises graphite.

10. The lithium secondary battery in accordance with claim 1, wherein said heat-resistant resin has a heat deformation temperature of 260°C or more.

11. The lithium secondary battery in accordance with claim 1, wherein said heat-resistant resin is at least one selected from the group consisting of aramid, polyimide, and polyamide-imide.

12. The lithium secondary battery in accordance with claim 1, wherein said separator comprises a laminate of said first porous layer and said second porous layer, and said first porous layer and said second porous layer are integrated.

13. The lithium secondary battery in accordance with claim 1, wherein one of said positive electrode and said negative electrode is covered with said second porous layer.

14. The lithium secondary battery in accordance with claim 14, wherein said positive electrode comprises a positive electrode material mixture containing said positive electrode active material, said negative electrode comprises a negative electrode material mixture containing said negative electrode active material, and one of said positive electrode material mixture and said negative electrode material mixture is covered with said second porous layer.
